# EUROPÄISCHE PATENTSCHRIFT

(11) **EP 3 458 917 B1**
(45) Veröffentlichungstag und Bekanntmachung des Hinweises auf die Patenterteilung: **23.04.2025**
(21) Anmeldenummer: 17723264.2
(22) Anmeldetag: 09.05.2017
(51) Int. Cl.: G05B 19/4061

(54) **KONTROLLSYSTEM FÜR EINEN FUNKTIONSABSCHNITT EINER PAPIERVERARBEITUNGSVORRICHTUNG**
CONTROL SYSTEM FOR A FUNCTIONAL SECTION OF A PAPER PROCESSING DEVICE
SYSTÈME DE CONTRÔLE D'UNE PARTIE FONCTIONNELLE D'UN DISPOSITIF DE TRAITEMENT DE PAPIER

(30) Priorität: 18.05.2016 DE 102016109128
(43) Veröffentlichungstag der Anmeldung: 27.03.2019
(73) Patentinhaber: BOBST MEX SA, 1031 Mex (CH)
(72) Erfinder: WICK, Stefan, 4625 Oberbuchsiten (CH)
(74) Vertreter: Wagner, Sigrid
(86) Internationale Anmeldenummer: PCT/EP2017/025113
(87) Internationale Veröffentlichungsnummer: WO 2017/198342

(56) Entgegenhaltungen:
- EP-A1- 1 662 349
- EP-A1- 2 858 939
- EP-A2- 1 479 964
- WO-A1-2008/028738
- DE-A1- 10 207 871
- DE-A1- 10 338 973
- DE-A1- 102006 048 166
- DE-A1- 102015 003 655
- DE-A1- 19 527 832
- US-A1- 2003 050 735
- US-A1- 2014 266 678

## Beschreibung

### Technisches Gebiet

Die vorliegende Erfindung betrifft ein Kontrollsystem für einen Funktionsabschnitt einer Papierverarbeitungsvorrichtung.

### Hintergrund der Erfindung

Moderne Herstellprozesse in der papierverarbeitenden Industrie, insbesondere bei mehrstufigen Herstelllinien in der papierverarbeitenden Industrie, werden häufig fernüberwacht und von entfernten Orten aus gesteuert. Dabei ist es notwendig, die Wartungsphasen mit z.B. dem Wartungspersonal exakt abzusprechen, um zu verhindern, dass z.B. die Herstelllinie gestartet wird, obwohl sich Wartungspersonal noch in sicherheitsrelevanten Bereichen befindet. Gerade bei hochkomplexen Abläufen und bei einem Einsatz mehrere Wartungsteams kann es häufig zu Fehlabsprachen kommen, sodass die Herstelllinie ohne Grund gestoppt wird oder in Betrieb genommen wurde, obwohl aus Sicherheitsgründen der Betrieb noch nicht wieder freigegeben worden ist.

Die EP 1 662 349 A1 beschreibt eine Vorrichtung zur Absicherung gefährlicher Bereiche einer Maschine. Sofern eine Person oder ein gefährlicher Gegenstand in dem Funktionsbereich festgestellt wird, wird entweder die ganze Maschine abgeschaltet oder es werden Teile der Maschine abgeschaltet oder bestimmte Teile der Maschine werden in einen sicheren Zustand gebracht, in dem eine Person oder ein unerlaubtes Objekt nicht mit den gefährlichen Teilen der Maschine in Berührung kommen kann.

Die DE 102 07 871 A1 beschreibt eine Sicherheitseinrichtung zur Überwachung eines nicht einsehbaren Gefahrenbereichs an einer Druckmaschine.

Die DE 103 38 973 A1 offenbart ein Verfahren sowie eine Vorrichtung zur Störungserfassung beim Transport einer Materialbahn in einer Materialbahn verarbeitenden Maschine.

Die DE 10 2015 003 655 A1 beschreibt, dass ein Roboter eines Robotersystems mittels einer Steuervorrichtung gesteuert werden kann, wobei Signale und Daten mittels eines tragbaren Bedienpaneels an die Steuervorrichtung gesendet werden können. Das Bedienpaneel kann zwischen einem gültigen und einem ungültigen Zustand umgestaltet werden. Im gültigen Zustand wird eine Operation unter Verwendung des Bedienpaneels für gültig erklärt, in einem ungültigen Zustand wird eine Operation des Bedienpaneels für ungültig erklärt.

Die DE 10 2006 048 166 A1 offenbart, dass direkt in eine Bewegungssteuerung einer Maschine eingegriffen wird oder eine Abschaltung bewirkt wird, wenn sich eine Person in einem Gefahrenbereich aufhält.

Die US 2003/0050735 A1 offenbart, dass ein Bewegungsbereich eines Roboters mittels eines Sensors einer Sicherheitseinrichtung überwacht wird, um festzustellen, ob sich eine Person im Bewegungsbereich befindet. Die Sicherheitseinrichtung kontrolliert eine Antriebsleistung der Bewegungssteuerung des Roboters. Die Sicherheitseinrichtung kann die Bewegungssteuerung kurzfristig unterdrücken oder abschalten.

Die US 2014/0266678 A1 offenbart, dass ein akustischer Alarm ausgelöst, wenn ein Prozessor festgestellt hat, dass eine Stromversorgung einen unteren vorgegebenen Schwellenwert erreicht. Nach dem Auslösen des Alarms kann ein Schnittstellengerät abgeschaltet werden.

EP 1 479 964 A2 beschreibt ein System zur Sicherheits-Fernsteuerung einer Maschine, wobei Steuersignale zur Steuerung der Maschine von einem mobilen Bediengerät an eine Basisstation übertragen werden und wobei eine räumliche Position des Bediengeräts bestimmt wird. Je nach Position des Bediengeräts wird ein Steuersignal übertragen oder unterdrückt.

Die WO 2008/028738 A1 beschreibt eine Druckmaschine mit mindestens einem von einer mobilen Bedieneinheit betätigten Aggregat, wobei das Aggregat einen von der Bedieneinheit übertragenen Stellbefehl nur dann ausführt, wenn sich die Bedieneinheit an einer Position innerhalb eines zu dem Aggregat gehörenden Bedienbereiches befindet.

Aus der EP2858939 A1 ist das Fernsteuern von Maschinen bekannt, wobei ein Kontrollsystem mit dem Einsatz von verschiedenen Kameras verwendet wird.

Aus der DE19527832 A1 ist ein Vor-Ort Freigabeschalter bekannt, damit eine Maschine so lange nicht betrieben werden kann, wie sich Personen in einem Gefahrenbereich befinden.

### Darstellung der Erfindung

Es ist eine Aufgabe der vorliegenden Erfindung, die Arbeitssicherheit einer Papierverarbeitungsvorrichtung zu verbessern.

Diese Aufgabe wird mit einem Kontrollsystem für einen Funktionsabschnitt einer Papierverarbeitungsvorrichtung gemäß dem unabhängigen Anspruch 1 und einem Verfahren gemäß dem Anspruch 11 gelöst.

Gemäß einem ersten Aspekt der vorliegenden Erfindung wird ein Kontrollsystem für einen Funktionsabschnitt einer Papierverarbeitungsvorrichtung beschrieben, wobei der Funktionsabschnitt einen Verarbeitungsschritt einer Papierverarbeitungsvorrichtung definiert. Das Kontrollsystem weist zumindest eine Sicherheitskamera auf, welche in dem Funktionsabschnitt angeordnet ist, derart, dass ein Funktionsbereich des Funktionsabschnitts, welcher durch eine Person betreten werden kann, mittels der Sicherheitskamera aufnehmbar ist. Das System weist ferner eine Bedieneinheit auf, welche räumlich entfernt von dem Funktionsabschnitt installiert ist und zum Bedienen des Funktionsabschnitts mittels einer Fernsteuerung eingerichtet ist. Das System weist ferner eine Sicherheitseinrichtung auf, welche mit der Sicherheitskamera und der Bedieneinheit gekoppelt ist. Die Sicherheitseinrichtung empfängt die von der Sicherheitskamera aufgenommenen Bilddaten der Sicherheitskamera, wobei die Sicherheitseinrichtung derart konfiguriert ist, dass die Sicherheitseinrichtung in Abhängigkeit der empfangenen Bilddaten der Sicherheitskamera eine Bedienung des Funktionsabschnitts mittels der Bedieneinheit zulässt oder eine Bedienung des Funktionsabschnitts mittels der Bedieneinheit sperrt, sodass eine Fernsteuerung des Funktionsabschnitts verhindert ist wenn die Sicherheitseinrichtung basierend auf den Bilddaten eine Person in dem Funktionsabschnitt erkennt. Das Kontrollsystem weist ferner eine erste Gruppe von Sicherheitskameras auf, welche in dem Funktionsabschnitt angeordnet sind, derart, dass der Funktionsbereich des Funktionsabschnitts mittels der Sicherheitskameras der ersten Gruppe aufnehmbar ist. Ferner weist das Kontrollsystem eine zweite Gruppe von Sicherheitskameras auf, welche in einem weiteren Funktionsabschnitt angeordnet sind, derart, dass ein weiterer Funktionsbereich des weiteren Funktionsabschnitts mittels der Sicherheitskameras der zweiten Gruppe aufnehmbar ist.

Ferner ist die Sicherheitseinrichtung derart konfiguriert, dass die Sicherheitseinrichtung in Abhängigkeit der empfangenen ersten Bilddaten der ersten Gruppe an Sicherheitskameras eine Bedienung des Funktionsabschnitts mittels der Bedieneinheit zulässt oder sperrt und dass die Sicherheitseinrichtung in Abhängigkeit der empfangenen zweiten Bilddaten der zweiten Gruppe an Sicherheitskameras eine Bedienung des weiteren Funktionsabschnitts mittels der Bedieneinheit zulässt oder sperrt.

Die Papierverarbeitungsvorrichtung ist insbesondere ausgebildet, um Papier, insbesondere Kartonlagen bzw. Kartonagen, zu verarbeiten. Entlang des Verarbeitungsprozesses der Papierverarbeitungsvorrichtung können zum Beispiel Kartonagen mehrlagig hergestellt, zugeschnitten und/oder bedruckt werden. Die Papierverarbeitungsvorrichtung weist insbesondere mehrere Funktionsabschnitte auf, wobei jeder Funktionsabschnitt jeweils einen Verarbeitungsschritt definiert. Ein Funktionsabschnitt umfasst beispielsweise eine Stapelvorrichtung (zum Stapeln von flächigen Kartonagenelementen oder zum Aufnehmen einzelner Kartonagenelemente von einem Stapel), eine Laminiervorrichtung (zum Verkleben mehrerer Schichten von Papier bzw. Kartonschichten), eine Papier-Zuführeinrichtung und/oder eine Trocknungseinrichtung.

Die Bedienvorrichtung ist ausgebildet, um den Funktionsabschnitt und entsprechend die Papierverarbeitungsvorrichtung zu betreiben und zu bedienen. Die Bedienvorrichtung kann beispielsweise der Papierverarbeitungsvorrichtung installiert sein. Die Bedienvorrichtung kann beispielsweise Steuerdaten drahtgebunden oder drahtlos an die Papierverarbeitungsvorrichtung übertragen, um somit Steuerbefehle zu senden oder von der Papierverarbeitungsvorrichtung Statusdaten bzw. Kontrolldaten zu empfangen. Die Bedieneinheit ist beispielsweise ein Computer, welcher die entsprechenden Daten mittels eines Mikroprozessors verarbeitet. Ferner weist die Bedieneinheit ein Eingabeelement, wie beispielsweise eine Tastatur, auf.

Die Sicherheitskamera bzw. mehrere Sicherheitskameras einer Gruppe sind einem Funktionsabschnitt zugeordnet. Die Sicherheitskamera nimmt in den Funktionsabschnitt besondere sicherheitsrelevante Bereiche auf. Beispielsweise können die sicherheitsrelevanten Bereiche Wartungsbereiche, Wartungsinstallationen oder andere bewegliche Maschinenelemente in dem Funktionsabschnitt darstellen, welche bei der Wartung oder Reparatur von einer Bedienperson gehandhabt bzw. gewartet werden müssen. Die Sicherheitskameras überwachen die sicherheitsrelevanten Bereiche des Funktionsabschnitts und nehmen Bilddaten (Einzelbilder oder Filmsequenzen bzw. Livestreams) auf und senden die Bilddaten an die Bedieneinheit und/oder die Anzeigeeinheit.

Mit dem erfindungsgemäßem System wird anhand von aufgenommen Bilddaten von Sicherheitskameras entschieden (von einer unten beschriebenen Sicherheitseinrichtung), ob eine Fernbedienung eines Funktionsabschnitts mit einer Bedieneinheit aus Sicherheitsgründen unbedenklich ist oder nicht. Somit wird die Sicherheit für Benutzer sowie für den Verarbeitungsprozess erhöht.

Die Sicherheitseinrichtung analysiert und bewertet die aufgenommenen Bilddaten aus. Basierend auf den aufgenommenen Bilddaten sperrt die Sicherheitseinrichtung die Bedieneinheit oder gibt diese frei. Erkennt die Sicherheitseinrichtung basierend auf den Bilddaten beispielsweise eine Person in dem Funktionsabschnitt, so sperrt die Sicherheitseinrichtung die Bedieneinheit. Dies bedeutet, dass beispielsweise ein Aktivieren des Verarbeitungsprozesses in dem Funktionsabschnitt von der Bedieneinheit nicht möglich ist. Da sich die Bedieneinheit entfernt von dem Funktionsabschnitt befindet, wird somit eine Fernsteuerung des Funktionsabschnitts verhindert. Alternativ kann die Sicherheitseinrichtung anhand der Bilddaten erkennen, ob die Sicherheitskameras korrekt funktionieren. Stellt die Sicherheitseinrichtung fest, dass die Sicherheitskameras nicht korrekt funktionieren, so sperrt die Sicherheitseinrichtung ebenfalls die Bedieneinheit, um ein übereiltes und unnötiges beenden des Prozesses in den Funktionsabschnitt zu verhindern.

Gemäß einer weiteren exemplarischen Ausführungsform ist die Sicherheitseinrichtung konfiguriert, die aufgenommenen Bilddaten mit Soll-Bilddaten zu vergleichen. Die Sicherheitseinrichtung lässt in Abhängigkeit der Übereinstimmung der Bilddaten mit den Soll-Bilddaten eine Bedienung des Funktionsabschnitts mittels der Bedieneinheit zu oder sperrt eine Bedienung des Funktionsabschnitts.

Gemäß einer weiteren exemplarischen Ausführungsform weist das Kontrollsystem zumindest eine Prozesskamera, welche in dem Funktionsabschnitt angeordnet ist, derart, dass ein Arbeitsprozess in dem Funktionsabschnitt mittels der Prozesskamera aufnehmbar ist. Die Prozesskamera ist mit der Bedieneinheit oder der Sicherheitseinrichtung derart gekoppelt ist, dass mittels der Bedieneinheit (durch den Benutzer) oder der Sicherheitseinrichtung basierend auf den aufgenommenen Arbeitsprozess dieser beendet werden kann. Die Prozesskamera nimmt insbesondere prozessrelevante Bilder des Arbeitsprozesses auf. Beispielsweise kann mit der Prozesskamera die Position eines Papierbandes oder das Abrollverhalten des Papierbandes von der Rolle aufgenommen werden. Stellt die Sicherheitseinrichtung basierend auf den aufgenommenen Bilddaten des Arbeitsprozesses fest, dass beispielsweise die Spur eines Papierbandes nicht korrekt verläuft, so kann die Sicherheitseinrichtung den Arbeitsprozess selbsttätig beenden.

Während die Prozesskamera Bilder eines Arbeitsprozesses aufnimmt, so nimmt im Vergleich hierzu die Sicherheitskamera den Arbeitsraum in dem Funktionsbereich auf, welche durch eine Person betreten werden kann. Dabei besteht durchaus die Möglichkeit, dass eine Prozesskamera als Sicherheitskamera fungiert und umgekehrt.

Gemäß einer weiteren beispielhaften Ausführungsform weist das Kontrollsystem eine Anzeigeeinheit auf. Mit der Bedieneinheit sind die Bilddaten der zumindest einen Sicherheitskamera auswählbar, wobei die Anzeigeeinheit konfiguriert ist, die ausgewählten Bilddaten anzuzeigen. Die Anzeigeeinheit ist dabei beispielsweise ein Bildschirm oder ein Beamer. Ein Benutzer kann basierend auf den angezeigten Bilddaten eine Bedienung des Funktionsabschnitts zulassen oder sperren.

Gemäß einer weiteren beispielhaften Ausführungsform sind die Anzeigeeinheit und die Bedieneinheit integral als Touch-Screen ausgebildet. Beispielsweise ist die Touch-Screen ein kapazitives Display.

Gemäß einer weiteren beispielhaften Ausführungsform ist die Anzeigeeinheit derart konfiguriert, dass der Funktionsabschnitt der Papierverarbeitungsvorrichtung anzeigbar ist, wobei die Bedieneinheit konfiguriert ist, dass der angezeigte Funktionsabschnitt auswählbar ist. Die Bedieneinheit ist konfiguriert, basierend auf dem ausgewählten Funktionsabschnitt den mittels der Sicherheitskamera aufgenommenen Funktionsbereich des Funktionsabschnitts auf der Anzeigeeinheit anzuzeigen. Somit kann die Papierverarbeitungsvorrichtung und entsprechend deren Funktionsabschnitte auf der Anzeigeeinheit (z.B. der Touch-Screen) abgebildet sein. Ein Benutzer kann mittels Fingerdrucks auf der Bedieneinheit (z.B. einen Anzeigebereich eines entsprechenden Funktionsabschnitts auf der Touch Screen) diesen auswählen. Sodann werden auf der Anzeigeeinheit die Bilder der Sicherheitskamera und/oder der Prozesskamera auf der Anzeigeeinheit abgebildet. Ferner kann der Betriebszustand des Arbeitsprozesses aus dem Funktionsabschnitt an der Anzeigeeinheit abgebildet werden. Zudem kann dem Benutzer angezeigt werden, ob die Sicherheitskamera Bilddaten liefert, welche ein Bedienen der Bedieneinheit zulassen oder nicht.

Gemäß einer weiteren beispielhaften Ausführungsform ist die Sicherungseinrichtung derart konfiguriert, aufgenommene erste Bilddaten der ersten Gruppe der Sicherheitskameras mit ersten Soll-Bilddaten und zweite Bilddaten der zweiten Gruppe der Sicherheitskameras mit zweiten Soll-Bilddaten zu vergleichen, wobei die Sicherheitseinrichtung in Abhängigkeit des Vergleichsergebnisses die ersten Bilddaten der ersten Gruppe der Sicherheitskameras und/oder die zweite Bilddaten der zweiten Gruppe der Sicherheitskameras an der Anzeigeeinheit darstellt. Mit anderen Worten werden die Bilder der ersten oder zweiten Sicherheitskameras nicht auf explizite Auswahl eines Benutzers sondern automatisch bzw. selbsttätig von der Sicherheitseinrichtung angezeigt. Somit kann der Benutzer auf der Anzeigeeinheit den Zustand der Anlage überwachen und wird automatisch auf Fehlfunktionen aufmerksam gemacht, indem die Bilddaten der kritischen Funktionsabschnitte automatisch auf der Anzeigeeinheit angezeigt werden.

Gemäß einer weiteren beispielhaften Ausführungsform ist die Bedieneinheit derart konfiguriert, dass der Funktionsabschnitt und/oder der weitere Funktionsabschnitt von einem Benutzer auswählbar ist. Die Bedieneinheit ist konfiguriert, in Abhängigkeit der Auswahl des Funktionsabschnitts oder des weiteren Funktionsabschnitts die erste Gruppe der Sicherheitskameras oder die zweite Gruppe der Sicherheitskameras an der Anzeigeeinheit darzustellen.

Gemäß einem weiteren Aspekt wird ein Verfahren zum Betreiben eines Kontrollsystems für einen Funktionsabschnitt einer Papierverarbeitungsvorrichtung beschrieben. Ein Funktionsbereich eines Funktionsabschnitts wird mittels einer Sicherheitskamera aufgenommen, wobei das Kontrollsystem die zumindest eine Sicherheitskamera aufweist, welche in dem Funktionsabschnitt angeordnet ist. Der Funktionsabschnitt wird mit einer Bedieneinheit des Kontrollsystems bedient. Mit der Bedieneinheit sind die Bilddaten der zumindest einen Sicherheitskamera auswählbar. Eine Anzeigeeinheit ist konfiguriert, die ausgewählten Bilddaten anzuzeigen, sodass ein Benutzer basierend auf den angezeigten Bilddaten eine Bedienung des Funktionsabschnitts zulässt oder sperrt.

Gemäß einer weiteren beispielhaften Ausführungsform ist eine Sicherheitseinrichtung mit der Sicherheitskamera und der Bedieneinheit gekoppelt. Die Sicherheitseinrichtung empfängt Bilddaten der Sicherheitskamera. Eine Bedienung des Funktionsabschnitts mittels der Bedieneinheit wird von der Sicherheitseinrichtung in Abhängigkeit der empfangenen Bilddaten der Sicherheitskamera zugelassen oder gesperrt.

Gemäß einer weiteren Ausführungsform des Verfahrens wird der Funktionsabschnitt der Papierverarbeitungsvorrichtung an der Anzeigeeinheit angezeigt. Der angezeigte Funktionsabschnitt wird mit der Bedieneinheit ausgewählt. Die Sicherheitseinrichtung zeigt basierend auf dem ausgewählten Funktionsabschnitt den mittels der Sicherheitskamera aufgenommenen Funktionsbereich des Funktionsabschnitts auf der Anzeigeeinheit an.

Gemäß einer weiteren beispielhaften Ausführungsform des Verfahrens wird der Funktionsbereich des Funktionsabschnitts mittels Sicherheitskameras einer ersten Gruppe angezeigt. Ein weiterer Funktionsbereich eines weiteren Funktionsabschnitts wird mittels Sicherheitskameras einer zweiten Gruppe angezeigt.

Gemäß einer weiteren beispielhaften Ausführungsform des Verfahrens lässt die Sicherheitseinrichtung zu oder sperrt eine Bedienung des Funktionsabschnitts mittels der Bedieneinheit in Abhängigkeit der empfangenen ersten Bilddaten der ersten Gruppe an Sicherheitskameras. Ferner lässt die Sicherheitseinrichtung zu oder sperrt eine Bedienung des weiteren Funktionsabschnitts mittels der Bedieneinheit in Abhängigkeit der empfangenen zweiten Bilddaten der zweiten Gruppe an Sicherheitskameras.

Gemäß einer weiteren beispielhaften Ausführungsform des Verfahrens werden mittels der Sicherheitseinrichtung aufgenommene erste Bilddaten der ersten Gruppe der Sicherheitskameras mit ersten Soll-Bilddaten und zweite Bilddaten der zweiten Gruppe der Sicherheitskameras mit zweiten Soll-Bilddaten verglichen, wobei die Sicherheitseinrichtung in Abhängigkeit des Vergleichsergebnisses die ersten Bilddaten der ersten Gruppe der Sicherheitskameras und/oder die zweite Bilddaten der zweiten Gruppe der Sicherheitskameras an der Anzeigeeinheit darstellt. Mit anderen Worten werden die Bilder der ersten oder zweiten Sicherheitskameras nicht auf explizite Auswahl eines Benutzers sondern automatisch bzw. selbsttätig von der Sicherheitseinrichtung angezeigt. Somit kann der Benutzer auf der Anzeigeeinheit den Zustand der Anlage überwachen und wird automatisch auf Fehlfunktionen aufmerksam gemacht, indem die Bilddaten der kritischen Funktionsabschnitte automatisch auf der Anzeigeeinheit angezeigt werden.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung einer Papierverarbeitungsvorrichtung mit einem Kontrollsystem gemäß einer beispielhaften ausführungsform der vorliegenden Erfindung, und
Fig. 2 eine schematische Darstellung einer Bedieneinheit und einer Anzeigeeinheit gemäß einer beispielhaften ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

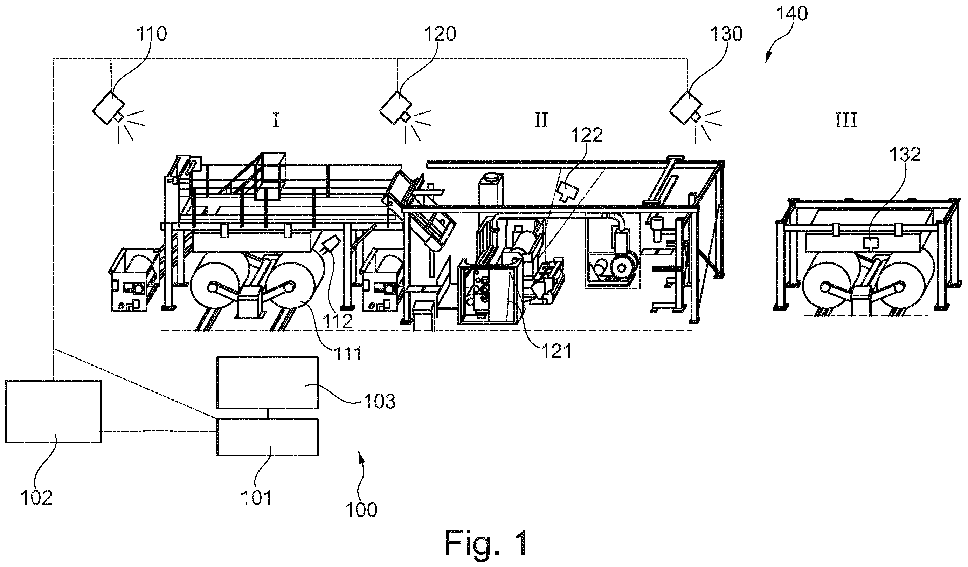

**Fig. 1** zeigt ein Kontrollsystem 100 für einen Funktionsabschnitt I, II, III einer Papierverarbeitungsvorrichtung 140. Das Kontrollsystem 100 weist zumindest eine Sicherheitskamera 110, 120, 130 auf, welche in dem Funktionsabschnitt I, II, III angeordnet ist, derart, dass ein Funktionsbereich des Funktionsabschnitts I, II, III mittels der Sicherheitskamera 110, 120, 130 aufnehmbar ist. Eine Bedieneinheit 101 des Systems 100 ist eingerichtet zum Bedienen des Funktionsabschnitts I, II, III. Mit der Bedieneinheit 101 sind die Bilddaten der zumindest einen Sicherheitskamera 110, 120, 130 auswählbar. Eine Anzeigeeinheit 103 ist konfiguriert, die ausgewählten Bilddaten anzuzeigen, sodass ein Benutzer basierend auf den angezeigten Bilddaten eine Bedienung des Funktionsabschnitts I, II, III zulässt oder sperrt.

Ferner kann eine Sicherheitseinrichtung 102 vorgesehen werden, welche mit der Sicherheitskamera 110, 120, 130 und der Bedieneinheit 101 gekoppelt ist, wobei die Sicherheitseinrichtung 102 Bilddaten der Sicherheitskamera 110, 120, 130 empfängt. Die Sicherheitseinrichtung 102 ist derart konfiguriert, dass die Sicherheitseinrichtung 102 in Abhängigkeit der empfangenen Bilddaten der Sicherheitskamera 110, 120, 130 eine Bedienung des Funktionsabschnitts I, II, III mittels der Bedieneinheit 101 zulässt oder eine Bedienung des Funktionsabschnitts I, II, III mittels der Bedieneinheit 101 sperrt.

Die Papierverarbeitungsvorrichtung 140 ist ausgebildet, um Papier, insbesondere Kartonlagen bzw. Kartonagen, zu verarbeiten. Entlang des Verarbeitungsprozesses der Papierverarbeitungsvorrichtung 140 können zum Beispiel Kartonagen mehrlagig hergestellt, zugeschnitten und/oder bedruckt werden. Die Papierverarbeitungsvorrichtung 140 weist insbesondere mehrere Funktionsabschnitte I, II, III auf, wobei jeder Funktionsabschnitt I, II, III jeweils einen Verarbeitungsschritt in einem Funktionsbereich definiert. Ein Funktionsabschnitt I, II, III umfasst beispielsweise eine Stapelvorrichtung (zum Stapeln von flächigen Kartonagenelementen oder zum Aufnehmen einzelner Kartonagenelemente von einem Stapel), eine Laminiervorrichtung (zum Verkleben mehrerer Schichten von Papier bzw. Kartonschichten), eine Papier-Zuführeinrichtung und/oder eine Trocknungseinrichtung.

Die Bedienvorrichtung 101 ist ausgebildet, um den Funktionsabschnitt I, II, III und entsprechend die Papierverarbeitungsvorrichtung 140 zu betreiben und zu bedienen. Die Bedienvorrichtung 101 ist dabei räumlich entfernt von dem Funktionsabschnitt I, II, III und beispielsweise der Papierverarbeitungsvorrichtung 140 installiert sein. Die Bedienvorrichtung 101 kann beispielsweise Steuerdaten drahtgebunden oder drahtlos an die Papierverarbeitungsvorrichtung 140 übertragen, um somit Steuerbefehle zu senden oder von der Papierverarbeitungsvorrichtung 140 Statusdaten bzw. Kontrolldaten zu empfangen. Die Bedieneinheit 140 weist ein Eingabeelement, wie beispielsweise eine Tastatur, auf.

Die Sicherheitskamera 110, 120, 130 bzw. mehrere Sicherheitskameras 110, 120, 130 einer Gruppe sind einem Funktionsabschnitt I, II, III zugeordnet. Die Sicherheitskamera 110, 120, 130 nimmt in den Funktionsabschnitt I, II, III besondere sicherheitsrelevante Bereiche auf. Beispielsweise können die sicherheitsrelevanten Bereiche Wartungsbereiche, Wartungsinstallationen oder andere bewegliche Maschinenelemente in dem Funktionsabschnitt darstellen, welche bei der Wartung oder Reparatur von einer Bedienperson gehandhabt bzw. gewartet werden müssen. Die Sicherheitskameras 110, 120, 130 überwachen die sicherheitsrelevanten Bereiche des Funktionsabschnitts I, II, III und nehmen Bilddaten (Einzelbilder oder Filmsequenzen bzw. Livestreams) auf und sendet die Bilddaten an die Bedieneinheit 101 und/oder die Sicherheitseinrichtung 102.

Der Benutzer analysiert und wertet die aufgenommenen Bilddaten aus. Ferner kann die Sicherheitseinrichtung 102 die aufgenommenen Bilddaten analysieren und bewerten. Basierend auf den aufgenommenen Bilddaten kann die Sicherheitseinrichtung 102 die Bedieneinheit 101 sperren oder freigeben. Zusätzlich kann der Benutzer mittels der Bedieneinheit 101 die Bedienung der Funktionsabschnitte I, II, III sperren.

Erkennt die Sicherheitseinrichtung 102 basierend auf den Bilddaten beispielsweise eine Person in dem Funktionsabschnitt I, II, III, so sperrt die Sicherheitseinrichtung 102 die Bedieneinheit 101. Dies bedeutet das beispielsweise ein Aktivieren des Verarbeitungsprozesses in dem Funktionsabschnitt I, II, III von der Bedieneinheit 101 nicht möglich ist. Befindet sich die Bedieneinheit 101 entfernt von dem Funktionsabschnitt I, II, III, so wird somit eine Fernsteuerung des Funktionsabschnitts I, II, III verhindert. Alternativ kann die Sicherheitseinrichtung 102 anhand der Bilddaten erkennen, ob die Sicherheitskameras 110, 120, 130 korrekt funktionieren. Stellt die Sicherheitseinrichtung 102 fest, dass die Sicherheitskameras 110, 120, 130 nicht korrekt funktionieren, so sperrt die Sicherheitseinrichtung 102 ebenfalls die Bedieneinheit 101, um ein übereiltes und unnötiges beenden des Prozesses in dem Funktionsabschnitt I, II, III zu verhindern.

Das Kontrollsystem weist zumindest eine Prozesskamera 112, 122, 132, welche in dem Funktionsabschnitt I, II, III angeordnet ist, derart, dass ein Arbeitsprozess 111, 121, 131 in dem Funktionsabschnitt I, II, III mittels der Prozesskamera 112, 122, 132 aufnehmbar ist. Die Prozesskamera 112, 122, 132 ist mit der Anzeigeeinheit 103 oder der Bedieneinheit 101 gekoppelt, dass mittels der Bedieneinheit 101 basierend auf den aufgenommenen Arbeitsprozess 111, 121, 131 dieser durch den Benutzer beendet werden kann. Ferner kann die Prozesskamera 112, 122, 132 mit der Sicherheitseinrichtung 102 derart gekoppelt sein, dass mittels der Sicherheitseinrichtung 102 basierend auf den aufgenommenen Arbeitsprozess 111, 121, 131 dieser beendet werden kann.

Die Prozesskamera 112, 122, 132 nimmt insbesondere prozessrelevante Bilder des Arbeitsprozesses 111, 121, 131 auf. Beispielsweise kann mit der Prozesskamera 112, 122, 132 die Position eines Papierbandes oder das Abrollverhalten des Papierbandes von der Rolle aufgenommen werden. Stellt die Sicherheitseinrichtung 102 basierend auf den aufgenommenen Bilddaten des Arbeitsprozesses 111, 121, 131 fest, dass beispielsweise die Spur eines Papierbandes nicht korrekt verläuft, so kann die Sicherheitseinrichtung 102 den Arbeitsprozess 111, 121, 131 selbsttätig beenden.

Während die Prozesskamera 112, 122, 132 Bilder eines Arbeitsprozesses 111, 121, 131 aufnimmt, so nimmt im Vergleich hierzu die Sicherheitskamera 110, 120, 130 den Arbeitsraum in dem Funktionsbereich auf, welche durch eine Person betreten werden kann. Dabei besteht durchaus die Möglichkeit, dass eine Prozesskamera112, 122, 132 als Sicherheitskamera 110, 120, 130 fungiert und umgekehrt.

Mit der Bedieneinheit 101 sind die Bilddaten der zumindest einen Sicherheitskamera 110, 120, 130 auswählbar, wobei eine Anzeigeeinheit 103 ist konfiguriert, die ausgewählten Bilddaten anzuzeigen. Die Anzeigeeinheit 103 und die Bedieneinheit 101 sind z.B. integral als Touch-Screen ausgebildet.

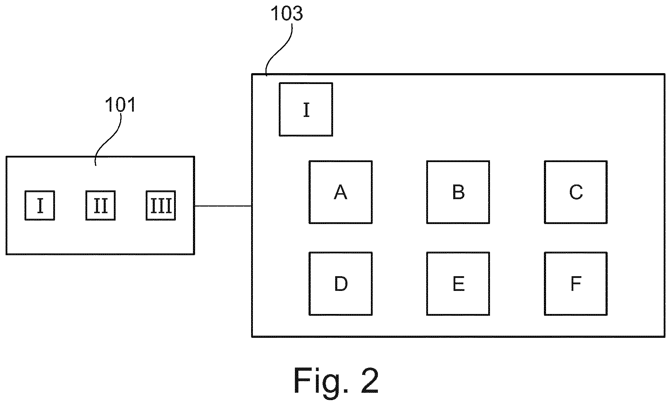

**Fig. 2** zeigt eine beispielhafte Darstellung der Bedieneinheit 101 und der Anzeigeeinheit 103. Mittels der Bedieneinheit 101 wird ein gewünschter Funktionsabschnitt I ausgewählt. Die Anzeigeeinheit 103 zeigt den Funktionsabschnitt I der Papierverarbeitungsvorrichtung 140 an. Die Bedieneinheit 101 ist konfiguriert, basierend auf dem ausgewählten Funktionsabschnitt I den mittels der Sicherheitskamera 110 aufgenommenen Funktionsbereich des Funktionsabschnitts I anhand von Kameraaufnahmen A bis F der Sicherheitskameras 110 aus dem Funktionsabschnitt I auf der Anzeigeeinheit 103 anzuzeigen. Somit kann die Papierverarbeitungsvorrichtung 140 und entsprechend deren Funktionsabschnitte I, II, III auf der Anzeigeeinheit 103 (z.B. einer Touch- Screen) abgebildet sein. Ein Benutzer kann mittels Fingerdrucks auf der Bedieneinheit 101 (z.B. einen Anzeigebereich eines entsprechenden Funktionsabschnitts I auf der Touch Screen) diesen auswählen. Sodann werden auf der Anzeigeeinheit 103 die Bilder A bis F der Sicherheitskameras 110 und/oder der Prozesskamera 112 auf der Anzeigeeinheit abgebildet. Ferner kann der Betriebszustand des Arbeitsprozesses 111, 121, 131 aus dem Funktionsabschnitt I an der Anzeigeeinheit 103 abgebildet werden. Zudem kann dem Benutzer angezeigt werden, ob die Sicherheitskamera 110 Bilddaten liefert, welche ein Bedienen der Bedieneinheit 101 zulassen oder nicht.

### Bezugszeichenliste:

- 100: Kontrollsystem
- 101: Bedieneinheit
- 102: Sicherheitseinrichtung
- 103: Anzeigeeinheit

- 110: (erste) Sicherheitskamera
- 111: erster Arbeitsprozess
- 112: Prozesskamera

- 120: (zweite) Sicherheitskamera
- 121: zweiter Arbeitsprozess
- 122: Prozesskamera

- 130: (dritte) Sicherheitskamera
- 131: dritter Arbeitsprozess
- 132: Prozesskamera

- 140: Papierverarbeitungsvorrichtung

- I: erster Funktionsabschnitt
- II: zweiter Funktionsabschnitt
- III: dritter Funktionsabschnitt

- A-F: Kameraaufnahmen

## Patentansprüche

1. Kontrollsystem (100) für einen Funktionsabschnitt (I, II, III) einer Papierverarbeitungsvorrichtung (140), wobei der Funktionsabschnitt (I, II, III) einen Verarbeitungsschritt einer Papierverarbeitungsvorrichtung (140) definiert, das Kontrollsystem (100) aufweisend: zumindest eine Sicherheitskamera (110, 120, 130), welche in dem Funktionsabschnitt (I, II, III) angeordnet ist, derart, dass ein Funktionsbereich des Funktionsabschnitts (I, II, III), welcher durch eine Person betreten werden kann, mittels der Sicherheitskamera (110, 120, 130) aufnehmbar ist,
eine Bedieneinheit (101), welche räumlich entfernt von dem Funktionsabschnitt (I, II, III) installiert ist und zum Bedienen des Funktionsabschnitts (1, 11, 111) mittels einer Fernsteuerung eingerichtet ist,
und
eine Sicherheitseinrichtung (102), welche mit der Sicherheitskamera (110, 120, 130) und der Bedieneinheit (101) gekoppelt ist,
wobei die Sicherheitseinrichtung (102) die von der Sicherheitskamera (110, 120, 130) aufgenommenen Bilddaten der Sicherheitskamera (110, 120, 130) empfängt,
wobei die Sicherheitseinrichtung (102) derart konfiguriert ist, dass die Sicherheitseinrichtung (102) in Abhängigkeit der empfangenen Bilddaten der Sicherheitskamera (110, 120, 130) eine Bedienung des Funktionsabschnitts (I, II, III) mittels der Bedieneinheit (101) zulässt oder eine Bedienung des Funktionsabschnitts (I, II, III) mittels der Bedieneinheit (101) sperrt, sodass eine Fernsteuerung des Funktionsabschnitts (I, II, III) verhindert ist, wenn die Sicherheitseinrichtung (102) basierend auf den Bilddaten eine Person in dem Funktionsabschnitt (I, II, III) erkennt;
**dadurch gekennzeichnet, dass** das Kontrollsystem ferner aufweist eine erste Gruppe von Sicherheitskameras (110), welche in dem Funktionsabschnitt (I) angeordnet sind, derart, dass der Funktionsbereich des Funktionsabschnitts (I) mittels der Sicherheitskameras (110) der ersten Gruppe aufnehmbar ist, eine zweite Gruppe von Sicherheitskameras (120), welche in einem weiteren Funktionsabschnitt (II) angeordnet sind, derart, dass ein weiterer Funktionsbereich des weiteren Funktionsabschnitts (II) mittels der Sicherheitskameras (120) der zweiten Gruppe aufnehmbar ist; und
die Sicherheitseinrichtung (102) derart konfiguriert ist, dass die Sicherheitseinrichtung (102) in Abhängigkeit der empfangenen ersten Bilddaten der ersten Gruppe an Sicherheitskameras (110) eine Bedienung des Funktionsabschnitts (I) mittels der Bedieneinheit (101) zulässt oder sperrt und dass die Sicherheitseinrichtung (102) in Abhängigkeit der empfangenen zweiten Bilddaten der zweiten Gruppe an Sicherheitskameras (120) eine Bedienung des weiteren Funktionsabschnitts (II) mittels der Bedieneinheit (101) zulässt oder sperrt.

2. Kontrollsystem (100) gemäß Anspruch 1, wobei der Funktionsabschnitt (I, II, III) eine Stapelvorrichtung, eine Laminiervorrichtung, eine Papier-Zuführeinrichtung und/oder eine Trocknungseinrichtung ist.

3. Kontrollsystem (100) gemäß Anspruch 1 oder 2, wobei die Sicherheitseinrichtung (102) konfiguriert ist, die aufgenommenen Bilddaten mit Soll-Bilddaten zu vergleichen, wobei die Sicherheitseinrichtung (102) in Abhängigkeit der Übereinstimmung der Bilddaten mit den Soll-Bilddaten eine Bedienung des Funktionsabschnitts (I, II, III) mittels der Bedieneinheit (101) zulässt oder sperrt.

4. Kontrollsystem (100) gemäß einem der Ansprüche 1 bis 3, ferner aufweisend zumindest eine Prozesskamera (112, 122, 132), welche in dem Funktionsabschnitt (I, II, III) angeordnet ist, derart, dass ein Arbeitsprozess (111, 121, 131) in dem Funktionsabschnitt (I , II, III) mittels der Prozesskamera (112, 122, 132) aufnehmbar ist, wobei die Prozesskamera (112, 122, 132) mit der Bedieneinheit (101), derart gekoppelt ist, dass durch einen Benutzer mittels der Bedieneinheit (101) oder selbsttätig durch die Sicherheitseinrichtung (102) basierend auf den aufgenommenen Arbeitsprozess dieser beendbar ist.

5. Kontrollsystem (100) gemäß einem der Ansprüche 1 bis 4, wobei die Anzeigeeinheit (103) und die Bedieneinheit (101) integral als Touch- Screen ausgebildet sind.

6. Kontrollsystem (100) gemäß einem der Ansprüche 1 bis 5, wobei die Anzeigeeinheit (103) konfiguriert ist, dass der Funktionsabschnitt (I, II, III) der Papierverarbeitungsvorrichtung (140) anzeigbar ist, wobei die Bedieneinheit (101) konfiguriert ist, dass der angezeigte Funktionsabschnitt (I, II, III) auswählbar ist, wobei die Bedieneinheit (101) konfiguriert ist, basierend auf dem ausgewählten Funktionsabschnitt (I, II, III) den mittels der Sicherheitskamera (110, 120, 130) auf genommenen Funktionsbereich des Funktionsabschnitts ( I , II, III) auf der Anzeigeeinheit (103) anzuzeigen.

7. Kontrollsystem (100) gemäß einem der vorhergehenden Ansprüche, wobei die Sicherheitseinrichtung (102) derart konfiguriert ist, aufgenommene erste Bilddaten der ersten Gruppe der Sicherheitskameras (110) mit ersten Soll-Bilddaten und zweite Bilddaten der zweiten Gruppe der Sicherheitskameras (120) mit zweiten Soll-Bilddaten zu vergleichen, wobei die Sicherheitseinrichtung (102) in Abhängigkeit des Vergleichsergebnisses die ersten Bilddaten der ersten Gruppe der Sicherheitskameras (110) und/oder die zweite Bilddaten der zweiten Gruppe der Sicherheitskameras (120) an der Anzeigeeinheit (103) darstellt.

8. Kontrollsystem (100) gemäß einem der vorhergehenden Ansprüche, wobei die Bedieneinheit (101) derart konfiguriert ist, dass der Funktionsabschnitt (I) und/oder der weitere Funktionsabschnitt (II) von einem Benutzer auswählbar ist, wobei die Bedieneinheit (101) konfiguriert ist, in Abhängigkeit der Auswahl des Funktionsabschnitts (I) oder des weiteren Funktionsabschnitts (II) die erste Gruppe der Sicherheitskameras (110) oder die zweite Gruppe der Sicherheitskameras (120) an der Anzeigeeinheit (103) darzustellen.

9. Verfahren zum Kontrollieren eines Funktionsabschnitts (I, II, III) einer Papierverarbeitungsvorrichtung (140), wobei der Funktionsabschnitt (I, II, III) einen Verarbeitungsschritt einer Papierverarbeitungsvorrichtung (140) definiert, das Verfahren aufweisend:
Aufnehmen eines Funktionsbereichs des Funktionsabschnitts (I, II, III) mittels einer Sicherheitskamera (110, 120, 130), welche in dem Funktionsabschnitt (I, II, III) angeordnet ist,
Bedienen des Funktionsabschnitts (I, II, III) durch Fernsteuern mittels einer Bedieneinheit (101), welche räumlich entfernt von dem Funktionsabschnitt (I, II, III) installiert ist,
wobei eine Sicherheitseinrichtung (102), welche mit der Sicherheitskamera (110, 120, 130) und der Bedieneinheit (101) gekoppelt ist, die von der Sicherheitskamera (110, 120, 130) aufgenommenen Bilddaten der Sicherheitskamera (110, 120, 130) empfängt,
wobei die Sicherheitseinrichtung (102) derart konfiguriert ist, dass die Sicherheitseinrichtung (102) in Abhängigkeit der empfangenen Bilddaten der Sicherheitskamera (110, 120, 130) eine Bedienung des Funktionsabschnitts (I, II, III) mittels der Bedieneinheit (101) zulässt oder eine Bedienung des Funktionsabschnitts (I, II, III) mittels der Bedieneinheit (101) sperrt, sodass eine Fernsteuerung des Funktionsabschnitts (I, II, III) verhindert ist, wenn die Sicherheitseinrichtung (102) basierend auf den Bilddaten eine Person in dem Funktionsabschnitt (I, II, III) erkennt;
**dadurch gekennzeichnet, dass** das Kontrollsystem ferner aufweist eine erste Gruppe von Sicherheitskameras (110), welche in dem Funktionsabschnitt (I) angeordnet sind, derart, dass der Funktionsbereich des Funktionsabschnitts (I) mittels der Sicherheitskameras (110) der ersten Gruppe aufnehmbar ist, eine zweite Gruppe von Sicherheitskameras (120), welche in einem weiteren Funktionsabschnitt (II) angeordnet sind, derart, dass ein weiterer Funktionsbereich des weiteren Funktionsabschnitts (II) mittels der Sicherheitskameras (120) der zweiten Gruppe aufnehmbar ist; und
die Sicherheitseinrichtung (102) derart konfiguriert ist, dass die Sicherheitseinrichtung (102) in Abhängigkeit der empfangenen ersten Bilddaten der ersten Gruppe an Sicherheitskameras (110) eine Bedienung des Funktionsabschnitts (I) mittels der Bedieneinheit (101) zulässt oder sperrt und dass die Sicherheitseinrichtung (102) in Abhängigkeit der empfangenen zweiten Bilddaten der zweiten Gruppe an Sicherheitskameras (120) eine Bedienung des weiteren Funktionsabschnitts (II) mittels der Bedieneinheit (101) zulässt oder sperrt.

## Claims

1. Control system (100) for a functional section (I, II, III) of a paper processing device (140), wherein the functional section (I, II, III) defines a processing step of a paper processing device (140), the control system (100) having: at least one safety-monitoring camera (110, 120, 130), which is arranged in the functional section (I, II, III), such that a functional region of the functional section (I, II, III), which can be entered by a person, can be captured by means of the safety-monitoring camera (110, 120, 130),
an operating unit (101), which is installed away from the functional section (I, II, III) and is designed to operate the functional section (1, 11, 111) by means of a remote control,
and
a safety apparatus (102), which is coupled to the safety-monitoring camera (110, 120, 130) and the operating unit (101),
wherein the safety apparatus (102) receives the image data captured by the safety-monitoring camera (110, 120, 130) from the safety-monitoring camera (110, 120, 130),
wherein the safety apparatus (102) is configured such that the safety apparatus (102) allows operation of the functional section (I, II, III) by means of the operating unit (101) or blocks operation of the functional section (I, II, III) by means of the operating unit (101), on the basis of the image data received from the safety-monitoring camera (110, 120, 130), such that remote control of the functional section (I, II, III) is prevented when the safety apparatus (102) recognizes a person in the functional section (I, II, III) based on the image data,
**characterized in that** the control system further has a first group of safety-monitoring cameras (110), which are arranged in the functional section (I), such that the functional region of the functional section (I) can be captured by means of the safety-monitoring cameras (110) of the first group, a second group of safety-monitoring cameras (120), which are arranged in a further functional section (II), such that a further functional region of the further functional section (II) can be captured by means of the safety-monitoring cameras (120) of the second group, and
the safety apparatus (102) is configured such that the safety apparatus (102) allows or blocks operation of the functional section (I) by means of the operating unit (101), on the basis of the first image data received from the first group of safety-monitoring cameras (110) and such that the safety apparatus (102) allows or blocks operation of the further functional section (II) by means of the operating unit (101), on the basis of the second image data received from the second group of safety-monitoring cameras (120).

2. Control system (100) according to claim 1, wherein the functional section (I, II, III) is a stacking device, a laminating device, a paper feed apparatus and/or a drying apparatus.

3. Control system (100) according to claim 1 or 2, wherein the safety apparatus (102) is configured to compare the captured image data with target image data, wherein the safety apparatus (102) allows or blocks operation of the functional section (I, II, III) by means of the operating unit (101), on the basis of the correlation of the image data with the target image data.

4. Control system (100) according to any one of claims 1 to 3, further having at least one process camera (112, 122, 132), which is arranged in the functional section (I, II, III), such that a working process (111, 121, 131) in the functional section (I, II, III) can be captured by means of the process camera (112, 122, 132), wherein the process camera (112, 122, 132) is coupled to the operating unit (101) such that the working process can be terminated by a user by means of the operating unit (101) or automatically by the safety apparatus (102), based on the working process captured.

5. Control system (100) according to any one of claims 1 to 4, wherein the display unit (103) and the operating unit (101) are constructed integrally as a touch screen.

6. Control system (100) according to any one of claims 1 to 5, wherein the display unit (103) is configured such that the functional section (I, II, III) of the paper processing device (140) can be displayed, wherein the operating unit (101) is configured such that the functional section (I, II, III) displayed can be selected, wherein the operating unit (101) is configured, based on the selected functional section (I, II, III), to display the functional region of the functional section (I, II, III) captured by means of the safety-monitoring camera (110, 120, 130) on the display unit (103).

7. Control system (100) according to any one of the preceding claims, wherein the safety apparatus (102) is configured such that captured first image data from the first group of safety-monitoring cameras (110) is compared with first target image data and second image data from the second group of safety-monitoring cameras (120) is compared with second target image data, wherein the safety apparatus (102) displays the first image data from the first group of safety-monitoring cameras (110) and/or the second further image data from the second group of safety-monitoring cameras (120) on the display unit (103) on the basis of the results of comparison.

8. Control system (100) according to any one of the preceding claims, wherein the operating unit (101) is configured such that the functional section (I) and/or the further functional section (II) can be selected by a user, wherein the operating unit (101) is configured to display the first group of safety-monitoring cameras (110) or the second group of safety-monitoring cameras (120) on the display unit (103) on the basis of the selection of the functional section (I) or the further functional section (II).

9. Method for controlling a functional section (I, II, III) of a paper processing device (140), wherein the functional section (I, II, III) defines a processing step of a paper processing device (140), the method having:
Capturing a functional region of the functional section (I, II, III) by means of a safety-monitoring camera (110, 120, 130), which is arranged in the functional section (I, II, III),
Operating the functional section (I, II, III) by remote control by means of an operating unit (101), which is installed away from the functional section (I, II, III),
wherein a safety apparatus (102), which is coupled to the safety-monitoring camera (110, 120, 130) and the operating unit (101), receives the image data captured by the safety-monitoring camera (110, 120, 130) from the safety-monitoring camera (110, 120, 130),
wherein the safety apparatus (102) is configured such that the safety apparatus (102) allows operation of the functional section (I, II, III) by means of the operating unit (101) or blocks operation of the functional section (I, II, III) by means of the operating unit (101), on the basis of the image data received from the safety-monitoring camera (110, 120, 130), such that remote control of the functional section (I, II, III) is prevented when the safety apparatus (102) recognizes a person in the functional section (I, II, III) based on the image data,
**characterized in that** the control system further has a first group of safety-monitoring cameras (110), which are
arranged in the functional section (I), such that the functional region of the functional section (I) can by captured by means of the safety-monitoring cameras (110) of the first group, a second group of safety-monitoring cameras (120), which are arranged in a further functional section (II), such that a further functional region of the further functional section (II) can be captured by means of the safety-monitoring cameras (120) of the second group, and
the safety apparatus (102) is configured such that the safety apparatus (102) allows or blocks operation of the functional section (I) by means of the operating unit (101), on the basis of the first image data received from the first group of safety-monitoring cameras (110) and such that the safety apparatus (102) allows or blocks operation of the further functional section (II) by means of the operating unit (101), on the basis of the second image data received from the second group of safety-monitoring cameras (120).

## Revendications

1. Système de contrôle (100) pour une section fonctionnelle (I, II, III) d'un dispositif de traitement de papier (140), dans lequel la section fonctionnelle (I, II, III) définit une étape de traitement d'un dispositif de traitement de papier (140), le système de contrôle (100) présentant : au moins une caméra de sécurité (110, 120, 130) qui est disposée dans la section fonctionnelle (I, II, III), de sorte qu'une zone fonctionnelle de la section fonctionnelle (I, II, III), qui peut être accédée par une personne, peut être enregistrée au moyen de la caméra de sécurité (110, 120, 130),
une unité de commande (101) qui est installée spatialement à l'écart de la section fonctionnelle (I, II, III) et est configurée pour commander la section fonctionnelle (1, 11, 111) au moyen d'une commande à distance,
et
un appareil de sécurité (102) qui est couplé à la caméra de sécurité (110, 120, 130) et à l'unité de commande (101),
dans lequel l'appareil de sécurité (102) reçoit les données d'image de la caméra de sécurité (110, 120, 130) enregistrées par la caméra de sécurité (110, 120, 130),
dans lequel l'appareil de sécurité (102) est configuré de sorte qu'en fonction des données d'image reçues de la caméra de sécurité (110, 120, 130), l'appareil de sécurité (102) autorise une commande de la section fonctionnelle (I, II, III) au moyen de l'unité de commande (101) ou bloque une commande de la section fonctionnelle (I, II, III) au moyen de l'unité de commande (101), de sorte qu'une commande à distance de la section fonctionnelle (I, II, III) est empêchée lorsque l'appareil de sécurité (102) reconnaît une personne dans la section fonctionnelle (I, II, III) sur la base des données d'image ;
**caractérisé en ce que** le système de contrôle présente en outre un premier groupe de caméras de sécurité (110) qui sont disposées dans la section fonctionnelle (I) de sorte que la zone fonctionnelle de la section fonctionnelle (I) peut être enregistrée au moyen des caméras de sécurité (110) du premier groupe, un second groupe de caméras de sécurité (120) qui sont disposées dans une section fonctionnelle supplémentaire (II) de sorte qu'une zone fonctionnelle supplémentaire de la section fonctionnelle supplémentaire (II) peut être enregistrée au moyen des caméras de sécurité (120) du second groupe ; et
l'appareil de sécurité (102) est configuré de sorte que l'appareil de sécurité (102) autorise ou bloque, en fonction des premières données d'image reçues du premier groupe de caméras de sécurité (110), une commande de la section fonctionnelle (I) au moyen de l'unité de commande (101) et que l'appareil de sécurité (102) autorise ou bloque, en fonction des secondes données d'image reçues du second groupe de caméras de sécurité (120), une commande de la section fonctionnelle supplémentaire (II) au moyen de l'unité de commande (101).

2. Système de contrôle (100) selon la revendication 1, dans lequel la section fonctionnelle (I, II, III) est un dispositif d'empilement, un dispositif de laminage, un appareil d'alimentation en papier et/ou un appareil de séchage.

3. Système de contrôle (100) selon la revendication 1 ou 2, dans lequel l'appareil de sécurité (102) est configuré pour comparer les données d'image enregistrées avec des données d'image de consigne, dans lequel l'appareil de sécurité (102) autorise ou bloque une commande de la section fonctionnelle (I, II, III) au moyen de l'unité de commande (101) en fonction de la correspondance des données d'image avec les données d'image de consigne.

4. Système de contrôle (100) selon l'une quelconque des revendications 1 à 3, présentant en outre au moins une caméra de processus (112, 122, 132) qui est disposée dans la section fonctionnelle (I, II, III) de sorte qu'un processus de travail (111, 121, 131) dans la section fonctionnelle (I , II, III) est enregistré au moyen de la caméra de processus (112, 122, 132), dans lequel la caméra de processus (112, 122, 132) est couplée à l'unité de commande (101) de sorte qu'un utilisateur peut mettre fin au processus de travail au moyen de l'unité de commande (101) ou automatiquement par l'appareil de sécurité (102) sur la base du processus de travail enregistré.

5. Système de contrôle (100) selon l'une quelconque des revendications 1 à 4, dans lequel l'unité d'affichage (103) et l'unité de commande (101) sont conçues d'un seul tenant en tant qu'écran tactile.

6. Système de contrôle (100) selon l'une quelconque des revendications 1 à 5, dans lequel l'unité d'affichage (103) est configurée de sorte que la section fonctionnelle (I, II, III) du dispositif de traitement de papier (140) peut être affichée, dans lequel l'unité de commande (101) est configurée de sorte que la section fonctionnelle affichée (I, II, III) peut être sélectionnée, dans lequel l'unité de commande (101) est configurée pour afficher sur l'unité d'affichage (103), sur la base de la section fonctionnelle (I, II, III) sélectionnée, la zone fonctionnelle de la section fonctionnelle (I , II, III) enregistrée au moyen de la caméra de sécurité (110, 120, 130).

7. Système de contrôle (100) selon l'une quelconque des revendications précédentes, dans lequel l'appareil de sécurité (102) est configuré de manière à comparer de premières données d'image enregistrées du premier groupe de caméras de sécurité (110) avec de premières données d'image de consigne et de secondes données d'image enregistrées du second groupe de caméras de sécurité (120) avec de secondes données d'image de consigne, dans lequel l'appareil de sécurité (102) représente les premières données d'image du premier groupe de caméras de sécurité (110) et/ou les secondes données d'image du second groupe de caméras de sécurité (120) sur l'unité d'affichage (103) en fonction du résultat de comparaison.

8. Système de contrôle (100) selon l'une quelconque des revendications précédentes, dans lequel l'unité de commande (101) est configurée de sorte que la section fonctionnelle (I) et/ou la section fonctionnelle supplémentaire (II) peut être sélectionnée par un utilisateur, dans lequel l'unité de commande (101) est configurée pour représenter le premier groupe de caméras de sécurité (110) ou le second groupe de caméras de sécurité (120) sur l'unité d'affichage (103) en fonction de la sélection de la section fonctionnelle (I) ou de la section fonctionnelle supplémentaire (II).

9. Procédé de contrôle d'une section fonctionnelle (I, II, III) d'un dispositif de traitement de papier (140), dans lequel la section fonctionnelle (I, II, III) définit une étape de traitement d'un dispositif de traitement de papier (140), le procédé présentant :
l'enregistrement d'une zone fonctionnelle de la section fonctionnelle (I, II, III) au moyen d'une caméra de sécurité (110, 120, 130) qui est disposée dans la section fonctionnelle (I, II, III),
la commande de la section fonctionnelle (I, II, III) par commande à distance au moyen d'une unité de commande (101) qui est installée à l'écart de la section fonctionnelle (I, II, III),
dans lequel un appareil de sécurité (102) qui est couplé à la caméra de sécurité (110, 120, 130) et à l'unité de commande (101), reçoit les données d'image de la caméra de sécurité (110, 120, 130) enregistrées par la caméra de sécurité (110, 120, 130),
dans lequel l'appareil de sécurité (102) est configuré de sorte qu'en fonction des données d'image reçues de la caméra de sécurité (110, 120, 130), l'appareil de sécurité (102) autorise une commande de la section fonctionnelle (I, II, III) au moyen de l'unité de commande (101) ou bloque une commande de la section fonctionnelle (I, II, III) au moyen de l'unité de commande (101), de sorte qu'une commande à distance de la section fonctionnelle (I, II, III) est empêchée lorsque l'appareil de sécurité (102) reconnaît une personne dans la section fonctionnelle (I, II, III) sur la base des données d'image ;
**caractérisé en ce que** le système de contrôle présente en outre un premier groupe de caméras de sécurité (110) qui
sont disposées dans la section fonctionnelle (I) de sorte que la zone fonctionnelle de la section fonctionnelle (I) peut être enregistrée au moyen des caméras de sécurité (110) du premier groupe, un second groupe de caméras de sécurité (120) qui sont disposées dans une section fonctionnelle supplémentaire (II) de sorte qu'une zone fonctionnelle supplémentaire de la section fonctionnelle supplémentaire (II) peut être enregistrée au moyen des caméras de sécurité (120) du second groupe ; et
l'appareil de sécurité (102) est configuré de sorte que l'appareil de sécurité (102) autorise ou bloque, en fonction des premières données d'image reçues du premier groupe de caméras de sécurité (110), une commande de la section fonctionnelle (I) au moyen de l'unité de commande (101) et que l'appareil de sécurité (102) autorise ou bloque, en fonction des secondes données d'image reçues du second groupe de caméras de sécurité (120), une commande de la section fonctionnelle supplémentaire (II) au moyen de l'unité de commande (101).
